# EUROPEAN PATENT SPECIFICATION

(11) **EP 3 484 287 B1**
(45) Date of publication and mention of the grant of the patent: **10.01.2024**
(21) Application number: 17743118.6
(22) Date of filing: 10.07.2017
(51) Int. Cl.: A01N 25/02, A01N 25/30, A01N 53/00, A01N 25/04, A01P 7/04

(54) **EMULSIFIABLE CONCENTRATES**
EMULGIERBARE KONZENTRATE
CONCENTRÉS ÉMULSIFIABLES

(30) Priority: 15.07.2016 US 201662362784 P
(43) Date of publication of application: 22.05.2019
(73) Proprietor: Dow Global Technologies LLC, Midland, MI 48674 (US)
(72) Inventor: KLAMO, Sara, B., Lake Jackson, TX 77566 (US); NG, Sze, Sze, Midland, MI 48686 (US)
(74) Representative: Boult Wade Tennant LLP
(86) International application number: PCT/US2017/041302
(87) International publication number: WO 2018/013450

(56) References cited:
- US-A1- 2008 182 754
- US-A1- 2009 239 750
- US-A1- 2010 292 323
- US-A1- 2012 053 217

## Description

### FIELD OF THE INVENTION

This invention relates to emulsifiable concentrates. In one aspect, the invention relates to concentrates of aromatic hydrocarbon soluble active ingredients, such as the pyrethroids, while in another aspect the invention relates to emulsifiable concentrates comprising alkylene oxide based glycol alkyl ether ester solvents having a linear, branched or cyclic alkyl group.

### BACKGROUND OF THE INVENTION

US 2008/182754 relates to a liquid agrochemical composition containing a hydrophobic agrochemical active compound. US 2009/239750 relates to an emulsion composition containing a plurality of organic solvents. US 2012/053217 relates to a composition for preparing emulsion or microemulsion formulations. US 2010/292323 relates to new aqueous microemulsions containing one or more pyrethroid compounds and to their use for plant protection, including seed and crop protection, and protection or non-living material. JP H02 104508 relates to a stable agricultural chemical composition, EP 2381032 relates to fabric and methods for preparing the same, especially to the insect repellant fabric and methods for preparing the same.

Various insecticides, e. g., bifenthrin, and fertilizer additives, e.g., nitrapyrin, are commercially available as emulsifiable concentrates (EC). Aromatic hydrocarbons, such as xylene and naphthalene, are often used as a solvent for EC. Many of these aromatic solvents exhibit adverse health effects and can negatively impact the environment. Also, many EC comprise one or more active ingredients (AI) that are not particularly soluble in aromatic hydrocarbon solvents, e.g., exhibit a solubility of less than 25%. Alternative solvents without, or at least with diminished, health and environmental concerns and that can solubilize more than 25% of an AI are of continuing interest.

### SUMMARY OF THE INVENTION

In the first aspect of the invention there is provided the composition defined by claim 1, which is a composition comprising:
(A) a first component comprising more than 25 wt% of an aromatic hydrocarbon soluble compound, wherein the aromatic soluble compound is bifenthrin; and
(B) a second component comprising:
   (1) from greater than 25 wt% to less than 75 wt% of an ethylene glycol n-butyl ether benzoate, or
   (2) from greater than or equal to 45 wt% to less than or equal to 65 wt% of a glycol alkyl ether ester having a polar Hansen parameter from 3.5 to 5.6 (J/cc)^{1/2} and a hydrogen bonding Hansen parameter from 8 to 9.2 (J/cc)^{1/2}, wherein the glycol alkyl ether ester is an ethylene glycol n-butyl ether acetate;
   wherein the composition is free of an aromatic hydrocarbon solvent.

In one embodiment the composition further comprises from greater than zero to 15 wt% of at least one of a surfactant, emulsifier, dispersant, humectant or adjuvant.

### DETAILED DESCRIPTION OF THE PREFERRED EMBODIMENT

### Definitions

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include one or more additional compounds unless stated to the contrary. In contrast, the term, "consisting essentially of" excludes from the scope of any succeeding recitation any other component, step, or procedure, excepting those that are not essential to operability. The term "consisting of" excludes any component, step, or procedure not specifically delineated or listed. The term "or," unless stated otherwise, refers to the listed members individually.

Unless stated to the contrary, implicit from the context, or customary in the art, all parts and percents are based on weight and all test methods are current as of the filing date of this disclosure.

"Aromatic hydrocarbon soluble" means that a compound is soluble in an aromatic hydrocarbon under ambient conditions, i.e., 23°C and 101.325 kPa (atmospheric pressure).

In this context, solubility is defined by the approximate volume of solvent in milliliters (mL) needed to dissolve 1 gram (g) of solute. Table 1 provides a summary of common solubility descriptions.

**TABLE 1**

| Description | Volume of solvent (mL) Needed to Dissolve 1 g of Solute |
|---|---|
| Very Soluble | Less than 1 |
| Freely Soluble | 1 to 10 |
| Soluble | 10 to 30 |
| Sparingly Soluble | 30 to 100 |
| Slightly Soluble | 100 to 1000 |
| Very Slightly Soluble | 1000 to 10,000 |
| Practically Insoluble | Greater than 10,000 |

Methods for measurement of active ingredient solubility involve dissolving the solid solute in a solvent using agitation or shaking under specified temperature and time conditions. The saturated solution is then separated from the solid using filtration. The concentration of the solute in the saturated solution is determined by analysis using ultraviolet (UV) spectroscopy or high pressure liquid chromatography with evaporative light scattering, UV, or mass spectrometry detection.

"Aromatic hydrocarbon", "arene", and "aryl hydrocarbon" terms mean a hydrocarbon with sigma bonds and delocalized pi electrons between carbon atoms forming monocyclic or polycyclic rings. Examples include, but are not limited to, benzene, toluene, and naphthalene.

"Hydrocarbon" means a compound consisting only of carbon and hydrogen atoms.

"Soluble" means that a compound can be dissolved with a solvent to form a solution.

"Solution" means a homogeneous composition that is (1) variable, i.e., can exist in different concentrations of solute in solvent, (2) all but one component is present in simplest units, e.g., molecules, and (3) can be separated by physical methods into two or more pure substances. In the context of this invention, solution refers to liquid compositions.

"Composition" means a mixture or blend of two or more components.

"Emulsion" means a mixture of two or more liquids that are normally immiscible (unmixable or unblendable) with one another, i.e., the liquids do not form a solution.

"Emulsifiable concentrate" means a formulation in which the concentrate is typically diluted in water to form a stable emulsion. "Stable" means that the emulsion will exhibit little, if any, deterioration over 24 hours under ambient conditions, e.g., 23°C and 101.325 kPa (atmospheric pressure).

"Free of an aromatic hydrocarbon solvent" means, in the context of the compositions of this invention, that the composition contains less than (<) 5, or <4, or <3, or <2, or <1, or <0.5, or <0.1, or <0.05, or <0.01, wt% of an aromatic hydrocarbon that can solubilize under ambient conditions (23°C and 101.325 kPa (atmospheric pressure)) an aromatic hydrocarbon soluble compound such as pyrethroid, organophosphate, organosulfite, carbamate, cyclohexanedione, isoxazole, phenoxy, and chloroacetanilide. Any such amount of aromatic hydrocarbon in the composition is typically present as a contaminant and is without any significant effect on the formation, maintenance and intended use of the composition. In one embodiment "free of an aromatic hydrocarbon solvent" means that the composition does not contain any amount of such solvent as measured by conventional gas chromatography (GC) or high pressure liquid chromatography (HPLC).

### Aromatic Hydrocarbon Soluble Compound

The first component of the compositions of this invention are aromatic hydrocarbon soluble compounds. The aromatic hydrocarbon soluble compound is the active ingredient bifenthrin.

The aromatic hydrocarbon soluble compound comprises greater than (>) 25, or greater than or equal to (≥) 30, or ≥ 35, weight percent (wt%) of the emulsion. Typically the aromatic hydrocarbon soluble compound comprises less than or equal to (≤) 75, or ≤ 70, or ≤ 55, wt% of the emulsion. In one embodiment the aromatic hydrocarbon soluble compound comprises from > 25 to ≤ 75, or from ≥ 30 to ≤ 70, or from ≥ 35 to ≤ 55, wt% of the emulsion.

### Glycol Alkyl Ether Esters

The second component, i.e., the nonaromatic solvent, of the compositions of this invention is at least one of:
(1) an ethylene glycol n-butyl ether benzoate,
(2) a glycol alkyl ether ester having a
   (a) polar Hansen parameter from 3.5 to 5.6 (J/cc)^{1/2}, and
   (b) hydrogen bonding Hansen parameter from 8 to 9.2 (J/cc)^{1/2}, wherein the glycol alkyl ether ester is an ethylene glycol n-butyl ether acetate.
Propylene glycol methyl ether propionate has a polar Hansen parameter of 4.9 (J/cc)^{1/2} and a hydrogen bonding Hansen parameter of 9.5 (J/cc)^{1/2}. Ethylene glycol n-butyl ether benzoate has a polar Hansen parameter of 6.6 (J/cc)^{1/2} and a hydrogen bonding Hansen parameter of 4.6 (J/cc)^{1/2}. Dipropylene glycol diacetate has a polar Hansen parameter of 3.5 (J/cc)^{1/2} and a hydrogen bonding Hansen parameter of 8.8 (J/cc)^{1/2}.

Hildebrand first developed the concept of describing the solubility properties of a solvent in terms of a numerical solubility parameter. Charles Hansen divided the total solubility parameter into three solubility parameters called Hansen solubility parameters (HSP). These individual parameters represent the dispersion forces (atomic), permanent dipole-permanent dipole forces (molecular), and hydrogen bonding (molecular) contributions to the total energy of vaporization of a liquid. The dispersion parameter (δ_{d}) describes "non-polar" interactions arising from atomic forces. The polar parameter (δₚ) describes
interactions between permanent dipoles. The hydrogen bonding parameter (δₕ) describes the attraction between molecules due to hydrogen bonds. Hansen solubility parameters have units of (J/cc)^{1/2}.

The HSP for many solvents can be obtained from Hansen Solubility Parameters - A User's Handbook, 2nd Edition, CRC Press, 2007. HSP for a given solvent can be derived using group contribution methods as described in Hansen's book or using the Yamamoto Molecular Break method available within the commercial HSPiP computer program. The HSP reported here for butyl CELLOSOLVE^{™} acetate and butyl CARBITOL^{™} acetate were obtained from Hansen's book, pages 399 and 418.

Examples of glycol alkyl ether esters having the required Hansen polar and hydrogen bonding parameters include, but are not limited to, 2-(2-butoxyethoxy)ethyl acetate, ethylene glycol n-butyl ether acetate, propylene glycol ethyl ether acetate, propylene glycol isopropyl ether acetate, propylene glycol isobutyl ether acetate, dipropylene glycol methyl ether acetate, and diethyleneglycol ethyl ether acetate.

The amount of the second component in the inventive composition is greater than (>) 25, or greater than or equal to (≥) 30, or ≥ 45, weight percent (wt%) of the composition. The second component comprises less than or equal to (≤) 75, or ≤ 70, or ≤ 55, wt% of the inventive composition. The second component comprises from > 25 to ≤ 75, or from ≥ 30 to ≤ 70, or from ≥ 45 to ≤ 65, wt% of the inventive composition. Typically the second component consists of just one of ethylene glycol n-butyl ether benzoate or glycol alkyl ether ester having the required Hansen polar and hydrogen bonding parameters.

The composition of this invention is free of an aromatic hydrocarbon solvent.

### Optional Ingredients

In one embodiment the compositions of this invention can comprise more than two components. In one embodiment the compositions of this invention comprise one or more of a surfactant, emulsifier, dispersant, humectant, antioxidant, colorant, adjuvant or other additive.

Surfactants useful in the invention can be anionic, nonionic or cationic in character and can function as wetting agents, suspending agents, anti-foaming and defoaming agents, along with other functions. Blends of anionic and nonionic surfactants are commonly utilized. Surfactants conventionally used in agricultural formulations are described in Encyclopedia of Surfactants, Vol. I-III, Chemical Publishing Co., New York, 1980-81 and in McCutcheon's Detergents and Emulsifiers Annual, MC Publishing Corp., Ridgewood, New Jersey, 1998. Typical surfactants include, but are not limited to, alkylphenol-alkylene oxide addition products, such as nonylphenol-C₁₈ ethoxylate, alcohol-alkylene oxide addition products, such as tridecyl alcohol-C₁₆ ethoxylate, quaternary amines, such as lauryl trimethyl ammonium chloride, salts of mono and dialkyl phosphate esters, and solid or liquid organosilicones. Examples of useful organosilicone surfactants include commercially available polysiloxane/polyether copolymers such as TEGOSTAB^{™} (trademark of Evonik AG) B-8462, B-8404 and B-8871, and DC-198 and DC-5043 surfactants, available from Dow Corning, and NIAX^{™} L-618 and NIAX^{™} L-627 surfactant from Momentive Performance Materials.

Representative emulsifiers include, but are not limited to, anionic emulsifiers such as alkaline earth, alkali metal, and amine salts of dodecyl benzene sulfonic acid, alkylarylsulfonic acids, and alkylnapthalenesulfonic acids, sodium dialkyl sulfosuccinate, sodium diisoctylsulfosuccinate, and amine salts of ether sulfates. Nonionic emulsifiers include fatty acid alkanolamides, condensation products of fatty alcohols, fatty amines, fatty acid esters, and fatty acid amides with ethylene oxide and/or propylene oxide, condensation products of linear or branched primary alcohols with ethylene oxide and/or propylene oxide, condensation products of linear or branched secondary alcohols with ethylene oxide and/or propylene oxide, fatty esters of polyhydric alcohol esters such as sorbitan fatty acid esters, condensation products of fatty esters of polyhydric alcohol esters with ethylene oxide such as polyoxyethylene sorbitan fatty acid esters, ethoxylated lanolin alcohols, ethoxylated lanolin acids. Cationic emulsifiers include aliphatic mono-, di-, or polyamine acetates and oleates. Combination anionic and nonionic emulsifier products available as preblended products include TENSIOFIX^{™} B.7416, B.7438, and B.7453 and ATLOX 4851B and 4855B.

Representative dispersants include, but are not limited to, nonionic surfactants and wetting agents such as those prepared by the sequential addition of propylene oxide and then ethylene oxide to propylene glycol, block copolymers of ethylene oxide and propylene oxide, and condensation products of linear alcohols with ethylene oxide and propylene oxide, such as butanol ethylene oxide or propylene oxide copolymer.

Representative humectants include, but are not limited to, propylene glycol, glycerol, and polyethylene glycol.

Representative adjuvants include, but are not limited to, spreaders, petroleum and plant derived oils and solvents, wetting agents. Adjuvants useful in emulsifiable compositions are described in Compendium of Herbicide Adjuvants, 9th Edition," edited by Bryan Young, Dept. of Plant, Soil, and Agricultural Systems, Southern Illinois University, MC-4415, 1205 Lincoln Dr., Carbondale, IL 62901. Examples of adjuvants include, but are not limited to, alkyl polysaccharides and blends, amine ethoxylates, polyethylene glycol esters, ethoxylated alkyl aryl phosphate esters, paraffin oil, horticultural spray oils, methylated rape seed oil, methylated soybean oil, refined vegetable oil, 2-ethyl hexyl stearate, n-butyl oleate, propylene glycol dioleate, isopropyl myristate, and ethylene vinyl acetate terpolymers.

The total amount of optional components in the inventive composition, if present, comprises greater than (>) 0, or greater than or equal to (≥) 0.5, or ≥ 1, or ≥ 1.5 weight percent (wt%) of the composition. Typically the total amount of optional components in the composition comprises less than or equal to (≤) 15, or ≤ 10, or ≤ 5, or ≤3 wt% of the composition. In one embodiment the total amount of optional components in the composition comprises from > 0 to ≤ 15, or from ≥ 0.5 to ≤ 10, or from ≥ 1 to ≤ 5, wt% of the composition.

### Composition

In one embodiment the composition of this invention comprises:
(A) a first component comprising more than 25 wt% of an aromatic hydrocarbon soluble compound, wherein the aromatic soluble compound is bifenthrin; and
(B) a second component comprising:
   (1) from greater than 25 wt% to less than 75 wt% of an ethylene glycol n-butyl ether benzoate, or
   (2) a glycol alkyl ether ester having a polar Hansen parameter from 3.5 to 5.6 (J/cc)^{1/2} and a hydrogen bonding Hansen parameter from 8 to 9.2 (J/cc)^{1/2}, wherein the glycol alkyl ether ester is an ethylene glycol n-butyl ether acetate;
   wherein the composition is free of an aromatic hydrocarbon solvent.

In one embodiment the composition is an emulsifiable composition.

In one embodiment the composition comprises more than two components. In one embodiment the composition comprises from greater than zero to 15 wt% of at least one of a surfactant, emulsifier, dispersant, humectant, antioxidant, colorant or adjuvant.

The composition is free of an aromatic hydrocarbon solvent.

Emulsifiable concentrates can be prepared in vessels or tanks having agitators for mixing or high shear mixing. All equipment and piping utilized is typically dry and free from moisture or residues of water. Nitrogen may be used to flush air from the process system prior to generation of the emulsifiable concentrate product. Composition components, including active ingredients, fertilizer additives, solvents, surfactants, emulsifiers, dispersants, humectants, adjuvants, antioxidants or colorants are added to the process vessel sequentially, as single components or in groups, with agitation. The components of the emulsifiable concentrate may be added in liquid, solid, or molten forms. The composition is mixed at controlled temperature, typically of 25 to 30 °C, for 1 to 2 hours or until a homogeneous solution is obtained. In some cases, the emulsifiable concentrate solution may be filtered using a GAF or similar filter.

The compositions of this invention are further described by the following examples.

### SPECIFIC EMBODIMENTS

### Materials

DOWANOL^{™} TPM is tripropylene glycol methyl ether available from The Dow Chemical Company.

DOWANOL^{™} TPNB is tripropylene glycol n-butyl ether available from The Dow Chemical Company.

Butyl CARBITOL^{™} Acetate is diethylene glycol n-butyl ether acetate available from The Dow Chemical Company.

Butyl CELLOSOLVE^{™} Acetate is ethylene glycol n-butyl ether acetate available from The Dow Chemical Company.

DOWANOL^{™} EPh is ethylene glycol phenyl ether available from The Dow Chemical Company.

DOWANOL^{™} EPh6 is polyethylene glycol monophenyl ether available from The Dow Chemical Company.

DOWANOL^{™} PPH is propylene glycol phenyl ether available from The Dow Chemical Company.

DOWANOL^{™} DiPPH is dipropylene glycol phenyl ether available from The Dow Chemical Company.

CARBITOL^{™} is diethylene glycol monoethyl ether available from The Dow Chemical Company.

DOWANOL^{™} PGDA is propylene glycol diacetate available from The Dow Chemical Company.

DIAMOSOLV^{™} 323 is ethyl laurate available from The Dow Chemical Company.

XU40782.00 is ethylene glycol n-butyl ether benzoate available from The Dow Chemical Company.

### Sample Preparation and Results

Four-milliliter (mL) vials are charged with bifenthrin (10 to 50 wt%), a stir bar, and solvent (90 to 50 wt%). The vials are capped and taped to seal. The vials are secured in a vial rack and shaken on a laboratory shaker for 12 hours at ambient lab temperature (21°C) and humidity (51%). After 12 hours each sample set is evaluated for solubility of solid:
Yes - Homogeneous clear solution
No - Solids present in the sample

Table 2 reports the results of solubility screening of bifenthrin at 10 to 50 wt%, in various solvents. Most glycol ethers having low water solubility show poor solubility of bifenthrin (20 wt% or less). Green aromatic replacement solvent ethyl laurate (DIAMOSOLV^{™} 323) shows poor solubility of bifenthrin (20 wt%). Several acetate and diacetate solvents, Butyl CARBITOL^{™} Acetate, Butyl CELLOSOLVE^{™} Acetate, and DOWANOL^{™} PGDA, solubilize bifenthrin at 30 wt% or greater. In particular Butyl CELLOSOLVE^{™} Acetate solubilizes bifenthrin at 40 wt%.

**Table 2**

| Solubility of Bifenthrin in Various Solvents | | | | | | | |
|---|---|---|---|---|---|---|---|
| | Bifenthrin | | | | | Hansen Parameter (J/cc)^{1/2} | |
| Solvent | 10 wt% | 20 wt% | 30 wt% | 40 wt% | 50 wt% | δP | δH |
| DOWANOL^{™} TPM | YES | YES | NO | NO | NO | | |
| DOWANOL^{™} TPNB | YES | YES | NO | NO | NO | | |
| BUTYL CARBITOL^{™} ACETATE* | YES | YES | YES | NO | NO | 4.1 | 8.2 |
| BUTYL CELLOSOLVE^{™} ACETATE* | YES | YES | YES | YES | NO | 4.5 | 8.8 |
| DOWANOL^{™} EPH | NO | NO | NO | NO | NO | | |
| DOWANOL^{™} EPH6 | NO | NO | NO | NO | NO | | |
| DOWANOL^{™} PPH | YES | NO | NO | NO | NO | | |
| DOWANOL^{™} DiPPH | YES | NO | NO | NO | NO | | |
| CARBITOL^{™} | YES | YES | NO | NO | NO | | |
| DOWANOL^{™} PGDA | YES | YES | YES | NO | NO | | |
| DIAMOSOLV^{™} 323 | YES | YES | NO | NO | NO | | |
| XU40782.00* | YES | YES | YES | NO | NO | 6.6 | 4.6 |

| | | | | | | | |
|---|---|---|---|---|---|---|---|
| * Solvent is an glycol alkyl ether ester | | | | | | | |

## Claims

1. A composition comprising:
(A) a first component comprising more than 25 wt% of an aromatic hydrocarbon soluble compound; wherein the aromatic soluble compound is bifenthrin; and
(B) a second component comprising:
(1) from greater than 25 wt% to less than 75 wt% of an ethylene glycol n-butyl ether benzoate, or
(2) from greater than or equal to 45 wt% to less than or equal to 65 wt% of a glycol alkyl ether ester having a polar Hansen parameter from 3.5 to 5.6 (J/cc)^{1/2} and a hydrogen bonding Hansen parameter from 8 to 9.2 (J/cc)^{1/2}; wherein the glycol alkyl ether ester is an ethylene glycol n-butyl ether acetate;
wherein the composition is free of an aromatic hydrocarbon solvent.

2. The composition of claim 1 further comprising one or more of a surfactant, emulsifier, dispersant, humectant, adjuvant, antioxidant or colorant.

3. The composition of claim 2 in which the one or more of a surfactant, emulsifier, dispersant, humectant, adjuvant, antioxidant or colorant comprises from greater than zero to less than or equal to 15 wt% of the composition.

4. The composition of claim 1 comprising
(A) a first component comprising more than 25 wt% of an aromatic hydrocarbon soluble compound; wherein the aromatic soluble compound is bifenthrin; and
(B) a second component comprising from greater than 25 wt% to less than 75 wt% of an ethylene glycol n-butyl ether benzoate.

5. The composition of claim 1 comprising
(A) a first component comprising more than 25 wt% of an aromatic hydrocarbon soluble compound; wherein the aromatic soluble compound is bifenthrin; and
(B) from greater than or equal to 45 wt% to less than or equal to 65 wt% of a glycol alkyl ether ester having a polar Hansen parameter from 3.5 to 5.6 (J/cc)^{1/2} and a hydrogen bonding Hansen parameter from 8 to 9.2 (J/cc)^{1/2}; wherein the glycol alkyl ether ester is an ethylene glycol n-butyl ether acetate.

## Patentansprüche

1. Zusammensetzung, umfassend:
(A) eine erste Komponente, umfassend zu mehr als 25 Gew.-% eine aromatische Kohlenwasserstoff-lösliche Verbindung; wobei die aromatische lösliche Verbindung Bifenthrin ist; und
(B) eine zweite Komponente, umfassend:
(1) zu von mehr als 25 Gew.-% bis weniger als 75 Gew.-% ein Ethylenglykol-n-butyletherbenzoat oder
(2) zu von mehr als oder gleich 45 Gew.-% bis weniger als oder gleich 65 Gew.-% einen Glykolalkyletherester, der einen polaren Hansen-Parameter von 3,5 bis 5,6 (J/cm3)^{1/2} und einen Hansen-Wasserstoffbindungsparameter von 8 bis 9,2 (J/cm3)^{1/2} aufweist; wobei der Glykolalkyletherester ein Ethylenglykol-n-butyletherazetat ist;
wobei die Zusammensetzung frei von einem aromatischen Kohlenwasserstofflösungsmittel ist.

2. Zusammensetzung nach Anspruch 1, ferner umfassend eines oder mehrere von einem Tensid, einem Emulgator, einem Dispergiermittel, einem Feuchthaltemittel, einem Adjuvans, einem Antioxidans oder einem Farbstoff.

3. Zusammensetzung nach Anspruch 2, wobei das eine oder die mehreren von einem Tensid, einem Emulgator, einem Dispergiermittel, einem Feuchthaltemittel, einem Adjuvans, einem Antioxidans oder einem Farbstoff zu von mehr als null bis weniger als oder gleich 15 Gew.-% die Zusammensetzung umfasst.

4. Zusammensetzung nach Anspruch 1, umfassend:
(A) eine erste Komponente, umfassend zu mehr als 25 Gew.-% eine aromatische Kohlenwasserstoff-lösliche Verbindung; wobei die aromatische lösliche Verbindung Bifenthrin ist; und
(B) eine zweite Komponente, umfassend zu von mehr als 25 Gew.-% bis weniger als 75 Gew.-% ein Ethylenglykol-n-butyletherbenzoat.

5. Zusammensetzung nach Anspruch 1, umfassend:
(A) eine erste Komponente, umfassend zu mehr als 25 Gew.-% eine aromatische Kohlenwasserstoff-lösliche Verbindung; wobei die aromatische lösliche Verbindung Bifenthrin ist; und
(B) zu von mehr als oder gleich 45 Gew.-% bis weniger als oder gleich 65 Gew.-% einen Glykolalkyletherester, der einen polaren Hansen-Parameter von 3,5 bis 5,6 (J/cm3)^{1/2} und einen Hansen-Wasserstoffbindungsparameter von 8 bis 9,2 (J/cm3)^{1/2} aufweist; wobei der Glykolalkyletherester ein Ethylenglykol-n-butyletherazetat ist.

## Revendications

1. Composition comprenant :
(A) un premier composant comprenant plus de 25 % en poids d'un composé soluble dans les hydrocarbures aromatiques ; dans laquelle le composé soluble dans les aromatiques est la bifenthrine ; et
(B) un second composant comprenant :
(1) de plus de 25 % en poids à moins de 75 % en poids d'un benzoate d'éther n-butylique d'éthylène glycol, ou
(2) de 45 % en poids ou plus à 65 % en poids ou moins d'un ester d'éther alkylique de glycol ayant un paramètre de Hansen polaire allant de 3,5 à 5,6 (J/cm³)^{1/2} et un paramètre de Hansen de liaison hydrogène allant de 8 à 9,2 (J/cm³)^{1/2} ; dans laquelle l'ester d'éther alkylique de glycol étant un acétate d'éther n-butylique d'éthylène glycol ;
dans laquelle la composition est exempte d'un solvant hydrocarboné aromatique.

2. Composition selon la revendication 1, comprenant en outre un ou plusieurs éléments parmi un agent tensioactif, un émulsifiant, un dispersant, un humectant, un adjuvant, un antioxydant ou un colorant.

3. Composition selon la revendication 2 dans laquelle le ou les éléments parmi un agent tensioactif, un émulsifiant, un dispersant, un humectant, un adjuvant, un antioxydant ou un colorant comprennent de zéro ou plus à 15 % en poids ou moins de la composition.

4. Composition selon la revendication 1 comprenant
(A) un premier composant comprenant plus de 25 % en poids d'un composé soluble dans les hydrocarbures aromatiques ; dans laquelle le composé soluble dans les aromatiques est la bifenthrine ; et
(B) un second composant comprenant de plus de 25 % en poids à moins de 75 % en poids d'un benzoate d'éther n-butylique d'éthylène glycol.

5. Composition selon la revendication 1 comprenant
(A) un premier composant comprenant plus de 25 % en poids d'un composé soluble dans les hydrocarbures aromatiques ; dans laquelle le composé soluble dans les aromatiques est la bifenthrine ; et
(B) de 45 % en poids ou plus à 65 % en poids ou moins d'un ester d'éther alkylique de glycol ayant un paramètre de Hansen polaire allant de 3,5 à 5,6 (J/cm³)^{1/2} et un paramètre de Hansen de liaison hydrogène allant de 8 à 9,2 (J/cm³)^{1/2} ; dans laquelle l'ester d'éther alkylique de glycol est un acétate d'éther n-butylique d'éthylène glycol.
